# FASCICULE DE BREVET EUROPEEN

(11) **EP 2 076 366 B1**
(45) Date de publication et mention de la délivrance du brevet: **02.03.2011**
(21) Numéro de dépôt: 07820909.5
(22) Date de dépôt: 04.10.2007
(51) Int. Cl.: B25J 21/02

(54) **SUPPORT DE GANT SOUPLE UTILISABLE DANS UNE OUVERTURE D'UNE BOITE A GANT**
IN DER ÖFFNUNG EINES HANDSCHUHFACHS VERWENDETER FLEXIBLER HANDSCHUHHALTER
FLEXIBLE GLOVE HOLDER USED IN THE OPENING OF A GLOVE BOX

(30) Priorité: 05.10.2006 FR 0654116
(43) Date de publication de la demande: 08.07.2009
(73) Titulaire: Areva NC, 75009 Paris (FR)
(72) Inventeur: HEBUTERNE, Francis, F-84420 Piolenc (FR); RIBA, Pierre, F-30150 Sauveterre (FR)
(74) Mandataire: Ilgart, Jean-Christophe
(86) Numéro de dépôt international: PCT/EP2007/060532
(87) Numéro de publication internationale: WO 2008/040775

(56) Documents cités:
- EP-A1- 0 549 450
- FR-A1- 2 741 745
- JP-A- 8 050 197
- US-A- 3 323 846

## Description

Le sujet de cette invention est un support de gant souple utilisable dans une ouverture d'une boîte où le gant est installé selon le préambule de la revendication 1. Un tel support est connu dans le document US-A-3323846. Les boîtes à gant sont couramment utilisées dans le nucléaire, la pharmacie ou d'autres industries où des produits dangereux doivent être manipulés sans contact direct mais à travers une paroi.

Ce support peut trouver emploi dans certaines circonstances où un travail important d'aménagement est fait dans la boîte à gant et oblige à tirer les gants vers l'extérieur pour éviter les risques qu'ils ne soient déchirés. La procédure actuelle consiste à nouer les gants après les avoir tirés hors de la boîte pour les retenir. Elle est désavantageuse en ce que le noeud peut endommager le gant, et qu'une poche d'air contaminé apparaît à l'extérieur et peut causer des accidents ou d'autres dommages soit par irradiation, soit en cas de fuite consécutive à un défaut d'étanchéité. Ce risque est d'autant plus important que la poche d'air est susceptible d'être comprimée pendant le nouage jusqu'à une pression supérieure à la pression ambiante, contrairement à la situation normale dans une boîte à gant où une ventilation entretient une dépression.

Le support de l'invention est un moyen d'un genre nouveau : pour maintenir commodément un gant souple sur une ouverture de boîte à gant sans qu'il soit besoin de faire un noeud, et donc en évitant les inconvénients mentionnés ci-dessus. De plus, la mise en place du gant sur le support et l'installation du support dans l'ouverture de la boîte sont rapides, ce qui maintient la dose d'irradiation reçue par l'opérateur à un niveau très faible, et une grande stabilité du gant sur le support subsiste après la mise en place.

Ce support est **caractérisé en ce qu'**il comprend une armature plane à trois branches essentiellement parallèles, une des branches étant une branche centrale et deux autres des branches étant des branches latérales, la branche centrale étant raccordée par ses extrémités opposées respectivement à chacune des branches latérales, et des pattes rayonnant de l'armature vers l'extérieur et destinées à être placées sur l'ouverture de la boîte à gant.

D'autres aspects et avantages de l'invention seront mentionnés plus loin.

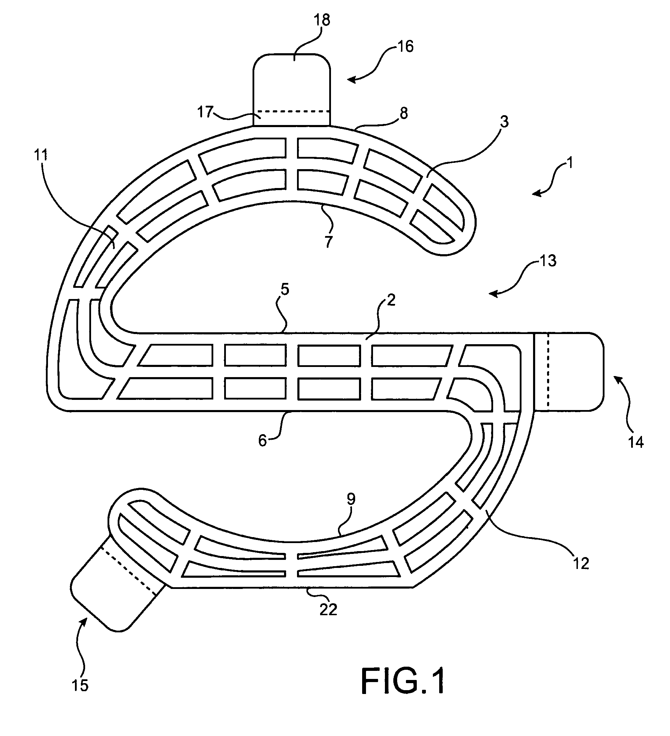

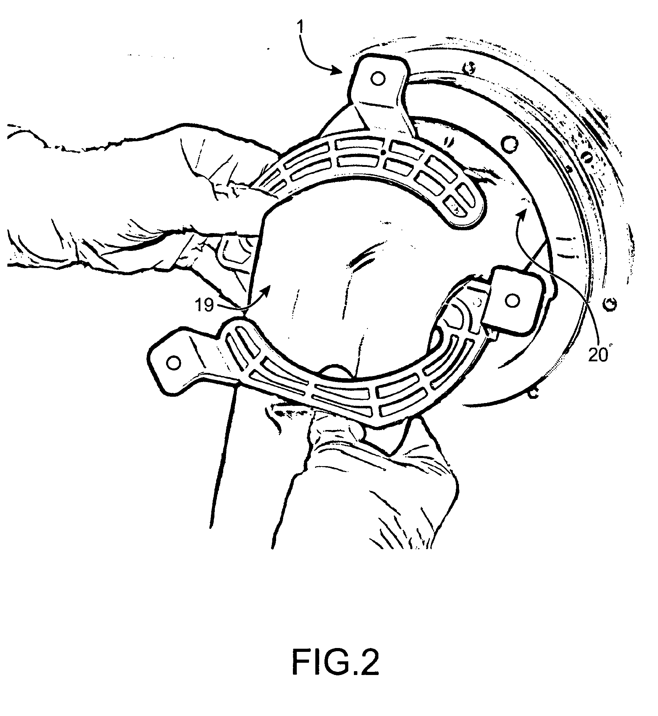

L'invention sera maintenant décrite en liaison aux figures suivantes, dont la figure 1 est une vue de face du support la figure 2 est une vue illustrant la mise en place du corps et l'installation du support dans l'ouverture de la boîte à gant.

Le support représenté à la figure 1 porte la référence 1. Il comprend une armature 13 plane composée de trois branches essentiellement parallèles dont une branche centrale 2, une première branche latérale 3 et une seconde branche latérale 4. La branche centrale 2 est pourvue de deux bords parallèles 5 et 6, la première branche latérale 3 d'un bord intérieur 7 concave et d'un bord extérieur 8 convexe, et de même la seconde branche latérale 4 est pourvue d'un bord intérieur 9 concave et d'un bord extérieur 10 convexe mais à grand méplat 22 central. Les branches latérales 3 et 4 sont pourvues de régions amincies 11 et 12 à des raccordements à la branche centrale 2. Les raccordements des branches latérales 3 et 4 à la branche centrale 2 se font à des extrémités opposées de celle-ci, ce qui donne à l'armature 13 une forme générale ressemblant à celle d'un S.

Le support 1 comprend encore trois pattes 14, 15, 16 destinées à l'installation du support 1 sur une ouverture de boîte à gant. Chacune des pattes 14, 15 et 16 comprend une portion 17 raccordée à l'armature 13 et s'étendant perpendiculairement à elle, et une portion de butée 18 parallèle à l'armature 13 qui est jointe à l'extrémité opposée de la première portion 17. Les portions de butée rayonnent vers l'extérieur du support 1.

L'autre figure illustre l'utilisation du support 1. Il est approché d'un gant 19 couvrant une ouverture 20 de boîte à gant. Le support 1 est placé devant l'ouverture 20, le gant 19 est tiré à l'extérieur et tendu successivement sur une série des branches 2, 3 et 4. Des surfaces de frottement importantes apparaissent entre des longueurs empilées et se touchant du gant 19 et par le contact du gant 19 avec les branches 2, 3 et 4. Quand une surface suffisante du gant 19 enveloppe le support 1, elle reste retenue en place et le support 1 peut être repoussé dans l'ouverture 20 jusqu'à ce que les portions de butée 18 touchent l'ouverture 20. Le gant est repoussé aussi dans l'ouverture 20, n'apparaît pas à l'extérieur et reste protégé contre les dommages. Son contenu gazeux reste caché et ne fait pas courir de risque à l'environnement s'il est radioactif.

Dans l'exemple illustré, on a d'abord enroulé le gant 19 autour de la branche centrale 2, puis de la seconde branche latérale 4 à l'endroit du méplat 22, et enfin de la première branche latérale 3 avant de repousser son bout libre vers la boîte à gant.

Les pattes 14, 15 et 16 sont disposées à distances angulaires comparables mais différentes. La première patte 14 est le prolongement de la branche centrale 2, au raccordement à la seconde branche latérale 4, la deuxième patte 15 est au bout de la seconde branche latérale 4 et la troisième patte 16 est au milieu de la première branche latérale 3. Les pattes 14, 15 et 16, les bords concaves 7 et 9, le méplat 22 et les raccordements entre branches à des extrémités opposées de la branche centrale 2 empêchent des glissements d'ensemble du gant 19 d'un côté ou de l'autre, puisque les pattes et les raccordements s'y opposent et les bords concaves maintiennent des enroulement du gant 19 en eux. Ce glissement latéral d'ensemble du gant 19 eût été le principal risque de détachage du support 1 ; il est ainsi éliminé.

L'armature 13 est contenue dans la section de l'ouverture 20 de la boîte à gant avec un peu de jeu. Le volume du gant 19 maintient le support 1 en place dans l'ouverture 20 à une position sensiblement centrée quand il a été enfoncé, et s'oppose à une chute involontaire.

## Revendications

1. Support de gant souple (19), utilisable dans une ouverture (20) d'une boîte à gant, **caractérisé en ce qu'**il comprend une armature (13) plane à trois branches essentiellement parallèles (2, 3, 4), une des branches étant une branche centrale (2) et deux autres des branches étant des branches latérales (3, 4), la branche centrale étant raccordée par ses extrémités opposées respectivement à chacune des branches latérales, et des pattes (14, 15, 16) rayonnant de l'armature vers l'extérieur et destinées à être placées sur l'ouverture de la boîte à gant.

2. Support de gant souple selon la revendication 1, **caractérisé en ce que** les pattes comprennent des portions (17) essentiellement perpendiculaires à l'armature (13), puis des portions (18) essentiellement parallèles à l'armature.

3. Support de gant souple selon l'une quelconque des revendications 1 ou 2, **caractérisé en ce que** les branches latérales ont des bords extérieurs à l'armature convexes (8, 10).

4. Support de gant souple selon l'une quelconque des revendications 1 à 3, **caractérisé en ce que** les branches ont des régions amincies (11, 12).

5. Support de gant souple selon l'une quelconque des revendications 4, **caractérisé en ce que** les branches latérales ont des bords intérieurs à l'armature concaves (9, 7).

6. Support de gant souple selon l'une quelconque des revendications 1 à 5, **caractérisé en ce que** les pattes sont trois, une (14) prolongeant la branche centrale (2), une autre (15) située à une extrémité libre d'une des branches latérales (4), une troisième (16) située à une portion centrale d'une autre des branches latérales (3).

## Claims

1. A flexible glove holder (19), used in the opening (20) of a glove box, **characterized in that** it comprises a flat structure (13) with three essentially parallel branches (2, 3, 4), one of the branches being a central branch (2) and the other two branches being side branches (3, 4), the central branch being connected by its opposite ends to each of the side branches, respectively, and legs (14, 15, 16) radiating outward from the structure and designed to be placed on the opening of the glove box.

2. The flexible glove holder according to claim 1, **characterized in that** the legs comprise portions (17) essentially perpendicular to the structure (13), then portions (18) essentially parallel to the structure.

3. The flexible glove holder according to any one of claims 1 or 2, **characterized in that** the side branches have convex edges (8, 10) outside the structure.

4. The flexible glove holder according to any one of claims 1 to 3, **characterized in that** the branches have thin regions (11, 12).

5. The flexible glove holder according to any one of claims 4, **characterized in that** the side branches have concave edges (9, 7) inside the structure.

6. The flexible glove holder according to any one of claims 1 to 5, **characterized in that** there are three legs, one (14) extending the central branch (2), another (15) located at a free end of one of the side branches (4), a third (16) located at a central portion of another of the side branches (3).

## Patentansprüche

1. Träger für flexiblen Handschuh (19), verwendbar in einer Öffnung (20) eines Handschuhkastens, **dadurch gekennzeichnet, dass** er aufweist: eine ebene Armatur (13) mit drei ihm Wesentlichen parallelen Schenkeln (2, 3, 4), wobei einer der Schenkel ein mittlerer Schenkel (2) und zwei weitere der Schenkel seitlichen Schenkel (3, 4) sind, und der mittlere Schenkel an seinen entgegengesetzten Enden jeweils mit einem der seitlichen Schenkel verbunden ist, und Laschen (14, 15, 16), die von der Armatur nach außen hin verlaufen und dazu bestimmt sind, auf der Öffnung des Handschuhkastens platziert zu sein.

2. Träger für flexiblen Handschuh nach Anspruch 1, **dadurch gekennzeichnet, dass** die Laschen Abschnitte (17), die im Wesentlichen senkrecht zur Armatur (13) sind, und dann Abschnitte (18) aufweisen, die im Wesentlichen parallel zur Armatur sind.

3. Träger für flexiblen Handschuh nach einem der Ansprüche 1 oder 2, **dadurch gekennzeichnet, dass** die seitlichen Schenkel konvexe Armaturaußenkanten (8, 10) aufweisen.

4. Träger für flexiblen Handschuh nach einem der Ansprüche 1 bis 3, **dadurch gekennzeichnet, dass** die Schenkel verjüngte Bereiche (11, 12) aufweisen.

5. Träger für flexiblen Handschuh nach einem der Ansprüche 4, **dadurch gekennzeichnet, dass** die seitlichen Schenkel konkave Armaturinnenkanten (9, 7) aufweisen.

6. Träger für flexiblen Handschuh nach einem der Ansprüche 1 bis 5, **dadurch gekennzeichnet, dass** drei Laschen vorhanden sind, wobei eine (14) den mittleren Schenkel (2) verlängert, eine andere (15) sich an einem freien Ende eines der seitlichen Schenkel (4) befindet, und eine dritte (16) sich an einem mittleren Abschnitt eines anderen der seitlichen Schenkel (3) befindet.
